(19) Europäisches Patentamt / European Patent Office / Office européen des brevets

(11) **EP 1 653 545 B1**

(12) **EUROPÄISCHE PATENTSCHRIFT**

(45) Veröffentlichungstag und Bekanntmachung des Hinweises auf die Patenterteilung:
**21.02.2007 Patentblatt 2007/08**

(51) Int Cl.:
**H01M 8/04** $^{(2006.01)}$

(21) Anmeldenummer: **04025976.4**

(22) Anmeldetag: **02.11.2004**

(54) **Verfahren zum Betrieb einer Brennstoffzellenanlage sowie Brennstoffzellenanlage**

Process of running a fuel cell stack and the stack itself

Procédé de fonctionnement d'un système de piles à combustible et le système en soi

(84) Benannte Vertragsstaaten:
**AT BE BG CH CY CZ DE DK EE ES FI FR GB GR HU IE IS IT LI LU MC NL PL PT RO SE SI SK TR**

(43) Veröffentlichungstag der Anmeldung:
**03.05.2006 Patentblatt 2006/18**

(73) Patentinhaber: **SIEMENS AKTIENGESELLSCHAFT**
**80333 München (DE)**

(72) Erfinder:
• **Coerlin, Detlev**
**91056 Erlangen (DE)**
• **Stühler, Walter**
**96114 Hirschaid (DE)**
• **Voitlein, Ottmar**
**91475 Lonnerstadt (DE)**

(56) Entgegenhaltungen:
**EP-A- 1 271 681        WO-A-20/04051780**
**WO-A-20/04079845       US-A1- 2004 076 859**
**US-A1- 2004 214 059**

• **VAN NGUYEN T ET AL: "A liquid water management strategy for PEM fuel cell stacks" JOURNAL OF POWER SOURCES, ELSEVIER SEQUOIA S.A. LAUSANNE, CH, Bd. 114, Nr. 1, 25. Februar 2003 (2003-02-25), Seiten 70-79, XP004412823 ISSN: 0378-7753**

**Beschreibung**

Die Erfindung betrifft ein Verfahren zur Steuerung der Füllstandshöhe eines Flüssigkeitsabscheiders einer Brennstoffzellenanlage sowie eine Brennstoffzellenanlage.

Für Brennstoffzellenanlagen werden je nach Anwendungsgebiet unterschiedliche Arten von Brennstoffzellen verwendet. Diese unterscheiden sich insbesondere im Hinblick auf das verwendete Reaktionsgas, den Elektrolyten der Brennstoffzelle sowie im Hinblick auf die Betriebstemperatur der Brennstoffzelle. Üblicherweise werden eine Vielzahl einzelner Brennstoffzellen zu einem Brennstoffzellenstapel zusammengefügt, um die elektrische Leistung der Brennstoffzellenanlage zu erhöhen. Die einzelnen Brennstoffzellen sind hierbei zueinander elektrisch in Reihe geschalten. Beim Betrieb der Brennstoffzellenanlage werden dem Brennstoffzellenstapel zwei Reaktionsgase zugeführt, nämlich einerseits ein Brenn- oder Anodengas, beispielsweise Wasserstoff, und andererseits ein Kathodengas, beispielsweise Sauerstoff, Luft oder mit Sauerstoff angereicherte Luft.

Aus der EP 1 271 681 A2 ist ein Brennstoffzellensystem zu entnehmen, bei dem zur Kühlung der Brennstoffzelle ein Kühlkreislauf mit einem Kühlwassertank vorgesehen ist. Über den Kühlkreislauf wird zugleich eine Befeuchtung der Reaktionsgase vorgenommen. Um ein Wasser- und Temperaturgleichgewicht beim Betrieb der Brennstoffzelle zu erreichen ist vorgesehen, den Druck der zugeführten Reaktionsgase zu steuern, um eine ausreichende Wassermenge zur Verfügung zu haben. Zur Ermittlung der bei der Reakton anfallenden Wassermenge wird auf Betriebsbedingungen wie den erzeugten Strom zurückgegriffen.

Aus dem Artikel "Management strategy for PEM fuel cell stacks", erschienen im Journal of Power sources, Elsevier Sequoia S.A. Lausanne, CH, Band 114, Nr. 1 vom 25. Februar 2003, Seiten 70-79, ist ein Verfahren zu entnehmen, bei dem zur Ermittlung der Verteilung der Reaktionsgase auf mehrere Brennstoffzellenstapel einer PEM Brennstoffzelle die Menge des angefallenen Reaktionswasser gemessen und hieraus auf die Gasmenge zurückgeschlossen wird.

Die PEM-Brennstoffzelle wird bei einer Betriebstemperatur von <80˚C betrieben. Das beim Betrieb auf der Kathodengasseite entstehende Reaktionswasser fällt aufgrund dieser niedrigen Betriebstemperatur als flüssiges Wasser an und wird mit einem Überschuss an Reaktionsgas aus dem Kathodengasraum der Zelle nach außen transportiert. Auch im Anodengas- oder Brenngasraum fällt aufgrund einer Befeuchtung der Reaktionsgase (sogenannte Reaktantenfeuchte) Wasser an.

Um einen möglichst hohen Wirkungsgrad zu erreichen, wird oftmals bei der Brennstoffzellenanlage das Prinzip der so genannten Kaskadierung angewandt. Hierbei weist die Brennstoffzellenanlage insgesamt mehrere Brennstoffzellenstapel auf, welche kaskadenartig nacheinander angeordnet sind. Die einzelnen Brennstoffzellenstapel sind hierbei sowohl gasseitig als auch elektrisch in Reihe angeordnet. Die einzelnen Brennstoffzellenstapel werden gasseitig mit Überschuss an Reaktionsgas versorgt und der Überschuss wird dem nachfolgenden Brennstoffzellenstapel eingangsseitig zugeführt. Im letzten Brennstoffzellenstapel wird das verbleibende Reaktionsgas verbraucht. Dieser Stapel wird daher im normalen Betrieb nicht mehr durchspült und es sammeln sich hierin Wasser sowie mit den Reaktionsgasen eingebrachte Inertgase an. Der letzte Brennstoffzellenstapel muss daher von Zeit zu Zeit gespült werden. Dieser letzte Brennstoffzellenstapel wird als Spülzellenstapel oder Spülzelle bezeichnet.

Insbesondere bei dieser kaskadenartigen Anordnung mehrerer Brennstoffzellenstapel ist zwischen zwei aufeinander folgenden Stapeln für jede Gasseite jeweils ein Wasserabscheider angeordnet. Das jeweilige überschüssige Reaktionsgas wird daher über den Abscheider zum nachfolgenden Stapel geleitet. Im Abscheider sammeln sich sowohl das bei der elektrolytischen Reaktion anfallende Reaktionswasser sowie die Reaktantenfeuchte als Wasser an. Das Wasser wird über eine mit einem Ventil verschließbare Ableitung aus dem Abscheider abgelassen. Der Abscheider sollte jedoch bis zu einer Mindestfüllstandshöhe mit Wasser gefüllt sein, um zum einen einen Gasverlust über das Ventil zu vermeiden. Zum anderen wird durch das Wasser im Abscheider auch die gewünschte Befeuchtung der Reaktionsgase aufrechterhalten. Die Füllstandsmenge im Abscheider wird daher gesteuert oder reguliert. Hierbei ist prinzipiell sowohl eine Niveausteuerung mit Hilfe von Füllstandssensoren möglich, als auch eine Zeitsteuerung, also ein Öffnen des Ventils nach vorbestimmten Zeitintervallen. Bei einer reinen Zeitsteuerung besteht jedoch das Problem, dass je nach abgegebener Leistung der Brennstoffzellenanlage unterschiedliche Mengen an Wasser pro Zeitintervall anfallen können, so dass über eine reine Zeitsteuerung diese dynamischen Prozesse nicht oder nur ungenügend abgebildet werden. Dieses Problem besteht bei der Verwendung von Füllstandssensoren nicht. Jedoch ist der apparative Aufwand für diese relativ hoch, da für jeden Abscheider eine Füllstandssensorik erforderlich ist.

Der Erfindung liegt die Aufgabe zugrunde, einen einfachen Betrieb einer Brennstoffzellenanlage zu ermöglichen.

Die Aufgabe wird gemäß der Erfindung gelöst durch ein Verfahren gemäß Anspruch 1.

Zur Ermittlung der in einem Zeitintervall erzeugten Strommenge wird der erzeugte Strom aufsummiert, es wird also das Zeitintegral über den zeitabhängigen Stromwert gebildet. Der Massenstrom des Reaktionsgases ist die pro Zeiteinheit verbrauchte Menge des jeweiligen Reaktionsgases.

Aus der aufsummierten Strommenge wird die im Zeitintervall anfallenden Menge an Wasser bestimmt, welches bei der elektrolytischen Reaktion anfällt. Zur Bestimmung des bei der Reaktion anfallenden Wassers wird hierbei zum einen die Menge des bei der elektrolytischen Reaktion anfallenden Produktwassers bestimmt. Dieses Produktwasser fällt auf der Sauerstoffseite als Reaktionsprodukt an. Die Menge des anfallenden Produktwassers ergibt sich unmittelbar aus der an der Reaktion teilnehmenden Gasmenge und der Reaktionsgleichung.

Zweckdienlicherweise wird für eine genaue Bestimmung des anfallenden Wassers zum anderen auch die bei der elektrolytischen Reaktion anfallende Wassermenge aufgrund der üblicherweise durchgeführten Befeuchtung der Reaktionsgase herangezogen. Die auskondensierte Menge der Reaktantenfeuchte ist ebenfalls proportional zu der bei der Reaktion verbrauchten Gasmenge des jeweiligen Reaktionsgases und hängt zudem von der Temperatur und den Druckverhältnissen ab.

Bei diesem Verfahren wird ausgenützt, dass der Massenstrom der Reaktionsgase direkt proportional zu der vom Brennstoffzellenstapel bzw. von der Brennstoffzellenanlage erzeugten Strommenge ist. Aus der Menge an Reaktionsgasen lässt sich wiederum aufgrund der Kenntnis der Reaktionsabläufe und insbesondere auch aufgrund der Kenntnis der Gaszusammensetzung der Reaktionsgase die Menge der bei der Reaktion anfallenden Produkte oder Abfallprodukte bestimmen. Ein besonderer Vorteil bei diesem Verfahren ist darin zu sehen, dass Ausgangspunkt für die Bestimmung der anfallenden Reaktions- und Abfallprodukte die von der Brennstoffzellenanlage erzeugte Strommenge ist, dass also dynamische Effekte, beispielsweise Schwankungen in der Leistungserzeugung, erfasst werden und in der Bestimmung der Menge der angefallenen Produkte eingehen. Dies ermöglicht daher eine genaue Bestimmung der Menge der angefallenen Produkte und somit eine genaue Steuerung des Betriebs der Brennstoffzellenanlage.

Vorzugsweise wird hierbei der Massenstrom aus der so genannten Faraday-Gleichung $z \cdot F \cdot \dot{m}_G / M_G = I(t)$ bestimmt. Hierbei ist z die Anzahl der bei der Reaktion teilnehmenden Elektronen, F die Faraday-Konstante, $\dot{m}_G$ der Massenstrom des Reaktionsgases, $M_G$ die Molmasse des jeweiligen Reaktionsgases und I(t) der aktuelle Stromwert.

Zur Steuerung einer geeigneten Füllstandshöhe im Flüssigkeitsabscheider wird zweckdienlicherweise ausgehend von einer bekannten Anfangs-Füllstandshöhe die aktuelle Füllstandshöhe errechnet und bei Erreichen einer maximalen Füllstandshöhe wird ein Ablassventil zur Entleerung des Flüssigkeitsabscheiders geöffnet. Zweckdienlicherweise erfolgt die Entleerung hierbei gesteuert, so dass sich im Flüssigkeitsabscheider eine neue definierte Anfangs-Füllstandshöhe einstellt. Die Entleerung erfolgt dabei bevorzugt zeitgesteuert. Hierbei wird unter Berücksichtigung einer bekannten Durchflussrate durch das Ablassventil über die Zeitdauer des geöffneten Ablassventils die abgelassene Menge des Wassers bestimmt.

Da die Steuerung der Entleerung auf der erzeugten Strommenge basiert wird diese Steuerung auch als ladungsabhängige Steuerung oder Überwachung der Füllstandshöhe im Flüssigkeitsabscheider bezeichnet. Diese wird zweckdienlicherweise bei einer Brennstoffzellenanlage mit kaskadierten Brennstoffzellenstapeln eingesetzt. Hierbei sind die einzelnen Brennstoffzellenstapel strömungstechnisch in Reihe angeordnet und zwischen zwei aufeinander folgenden Brennstoffzellenstapeln ist für jede Gasseite jeweils ein Flüssigkeitsabscheider vorgesehen. Die Brennstoffzellenstapel werden hierbei mit unterschiedlichen Teil-Massenströmen beaufschlagt, die zueinander ein definiertes Verhältnis aufweisen. Dieses Verhältnis richtet sich hierbei nach der Anzahl der einzelnen Brennstoffzellen in den einzelnen Brennstoffzellenstapeln.

Gemäß einer zweckdienlichen Weiterbildung wird die ladungsabhängige Steuerung nicht nur zur Füllstandsüberwachung des Flüssigkeitsabscheiders, sondern zusätzlich oder alternativ auch zur Steuerung eines Spülvorgangs einer Spülzelle der Brennstoffzellenanlage herangezogen. Als eine Spülzelle oder ein Spülzellenstapel wird hierbei die strömungstechnisch gesehen letzte Spülzelle bzw. der letzte Spülzellenstapel verstanden, welcher gasaustrittsseitig mit einem Spülventil verschlossen ist. In dieser Spülzelle sammeln sich im Laufe des Betriebs sowohl Wasser als auch Inertgase an. Insbesondere die Inertgase führen zu Einbußen bei der elektrischen Leistung der Brennstoffzellenanlage. Daher muss die Spülzelle von Zeit zu Zeit gespült werden, d.h. das Spülventil wird geöffnet und die angesammelte Inertgase sowie das angesammelte Wasser werden zusammen mit einem Teil von nicht verbrauchten Reaktionsgasen abgeleitet. Aufgrund des hiermit verbundenen Schlupfes an Reaktionsgasen werden die Spülprozesse auf das notwendige Mindestmaß beschränkt. Bisher werden hierzu Spannungs- oder stromabhängige Regelungen verwendet. Diese Regelungen erfordern teilweise einen recht hohen Schaltungsaufwand. Im Vergleich hierzu ist es bei der hier vorgeschlagenen Steuerung oder Regelung ausreichend, die von der Brennstoffzellenanlage erzeugte Strommenge zu erfassen.

Die Aufgabe wird gemäß der Erfindung weiterhin gelöst durch eine Brennstoffzellenanlage mit den Merkmalen gemäß Patentanspruch 10. Die im Hinblick auf die zum Verfahren angeführten Vorteile und bevorzugten Ausgestaltungen sind sinngemäß auch auf die Brennstoffzellenanlage zu übertragen.

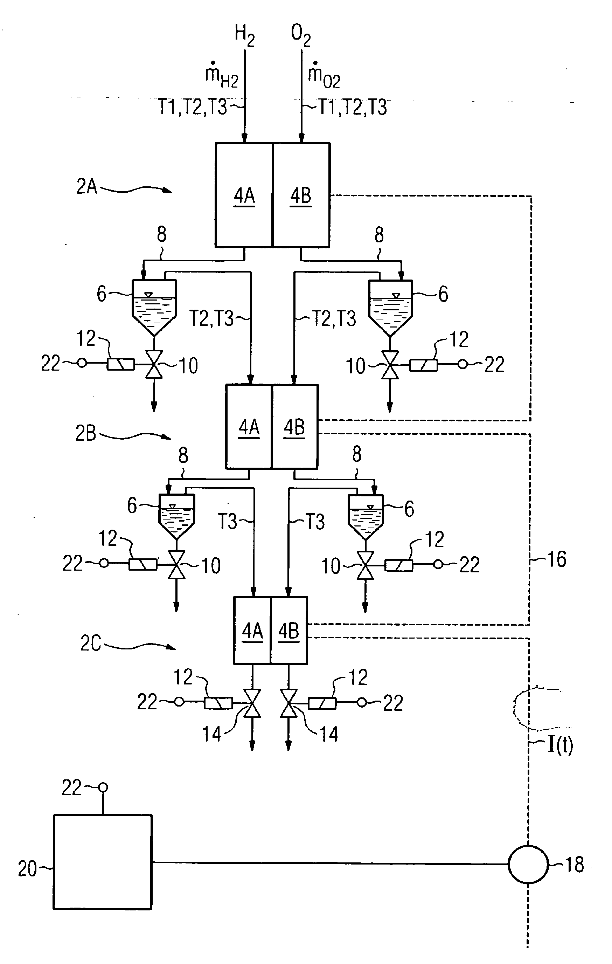

Ein Ausführungsbeispiel der Erfindung wird im Folgenden anhand der einzigen Figur der Zeichnung näher erläutert. Diese zeigt in einer schematischen und stark vereinfachten Darstellung eine kaskadierte PEM-Brennstoffzellenanlage.

Die Brennstoffzellenanlage umfasst im skizzierten Ausführungsbeispiel drei in Reihe nacheinander angeordnete Brennstoffzellenstapel 2A,B,C unterschiedlicher Größe. Die Größe nimmt in der durch Pfeile angedeuteten Durchflussrichtung kontinuierlich ab. Die Brennstoffzellenstapel 2A, B, C weisen jeweils eine Mehrzahl von einzelnen hier nicht näher dargestellten Brennstoffzellen auf. Jeder Brennstoffzellenstapel 2A,B,C ist in zwei Gasräume 4A,B unterteilt, und zwar für das Brenn- oder Anodengas auf der einen Seite und für das Kathodengas auf der anderen Seite. Als Brenngas wird im Ausführungsbeispiel Wasserstoff $H_2$ und als Kathodengas Sauerstoff $O_2$ verwendet.

Diese beiden Reaktionsgase durchströmen die einzelnen Brennstoffzellenstapel 2A,B,C nacheinander. Zwischen zwei aufeinander folgenden Brennstoffzellenstapeln 2A,B,C ist für jede Gasseite jeweils ein Flüssigkeitsabscheider 6 in eine Gasleitung 8 zwischengeschaltet. Jedem Flüssigkeitsabscheider 6 ist ein Ablassventil 10 mit einem Stellelement 12 zugeordnet.

Der letzte Brennstoffzellenstapel 2C ist als ein Spülzellenstapel ausgebildet, welcher endseitig durch Spülventile 14 verschlossen ist, die bei Bedarf geöffnet werden.

Die einzelnen Brennstoffzellenstapel 2A,B,C sind elektrisch in Serie zueinander geschaltet, wie durch die punktiert dargestellte elektrische Leitung 16 angedeutet ist. In diese elektrische Leitung 16 ist ein Strommessgerät 18 geschaltet, welches mit einer kombinierten Auswerte- und Steuereinheit 20 verbunden ist. Diese Steuereinheit 20 ist wiederum mit den einzelnen Stellelementen 12 insbesondere über Steuerleitungen 22 verbunden.

Beim Betrieb der Brennstoffzellenanlage werden den einzelnen Brennstoffzellenstapeln 2A,B,C Reaktionsgase zugeführt. Hierbei wird für jedes der beiden Reaktionsgase ein definierter Gas-Massenstrom $\dot{m}_G$ ($\dot{m}_{H2}, \dot{m}_{O2}$), also eine vorbestimmte Gasmenge des jeweiligen Reaktionsgases pro Zeiteinheit, zugeführt. Von diesem Gesamt-Massenstrom $\dot{m}_G$ nimmt ein Teil-Massenstrom T1 an der elektrolytischen Reaktion im ersten Brennstoffzellenstapel 2A teil und wird hierbei verbraucht, d.h. entsprechend der Reaktionsgleichung

$$2H_2 + 2O_2 \Rightarrow 2H_2O$$

zu Produktwasser als Reaktionsprodukt umgesetzt. Der Produktwasser-Massenstrom wird mit $\dot{m}_W$ bezeichnet.

Neben dem Produktwasser $m_w$ kondensiert auch die so genannte Reaktantenfeuchte $m_F$ bei der elektrolytischen Reaktion aus. Unter Reaktantenfeuchte wird hierbei die Feuchtebeladung der Reaktionsgase verstanden, da diese zum Betrieb der Brennstoffzellenanlage in der Regel befeuchtet werden.

Der verbleibende Gasstrom wird über den nachfolgenden Flüssigkeitsabscheider 6 geführt, wo das Produktwasser $m_W$ sowie die Reaktantenfeuchte $m_F$ abgeschieden werden, bevor das Restgas dem zweiten Brennstoffzellenstapel 2B zugeführt wird. In diesem wird - wie bereits im ersten Brennstoffzellenstapel 2A - lediglich ein Teil-Massenstrom T2 der Reaktionsgase verbraucht. Der verbleibende Rest-Teilstrom T3 wird wieder über den nachfolgenden Abscheider geführt und dem dritten Brennstoffzellenstapel 2C zugeführt.

In diesem letzten Brennstoffzellenstapel 2C wird idealerweise die restliche Gasmenge entsprechend dem Teil-Massenstrom T3 vollständig umgesetzt. Da hier der Gasstrom nicht mehr durchgeführt wird, sammelt sich in der Spülzelle 2C das Produktwasser $m_W$ und die Reaktantenfeuchte $m_F$ an. Da die Reaktionsgase zudem keine 100%ige Reinheit besitzen, sondern vielmehr einen gewissen Anteil an Inertgasen aufweisen, sammeln sich diese zusätzlich im Spülzellenstapel 2C an. Da mit zunehmender Inertgaskonzentration die elektrische Leistungsabgabe der gesamten Brennstoffzellenanlage verschlechtert wird, muss der Spülzellenstapel 2C von Zeit zu Zeit gespült werden. Hierzu werden die Spülventile 14 zu gegebener Zeit geöffnet und anschließend wieder verschlossen.

Die einzelnen Teil-Massenströme T1,T2,T3 weisen ein definiertes und festes Verhältnis zueinander auf, welches zu dem Verhältnis der Anzahl der einzelnen Brennstoffzellen der drei Brennstoffzellenstapel 2A,B,C korreliert.

Beim Betrieb der Brennstoffzellenanlage sollten die einzelnen Flüssigkeitsabscheidern 6 bis zu einer Mindestfüllstandshöhe mit Wasser gefüllt sein, um einen Gasdurchbruch zu verhindern. Gleichzeitig sollte die Füllstandshöhe eine maximale Füllstandshöhe nicht überschreiten, um zu verhindern, dass Wasser in den nachfolgenden Brennstoffzellenstapel 2B,C mitgerissen wird. Es ist daher eine Füllstahdsuberwachung der Flüssigkeitsabscheider erforderlich und vorgesehen.

Im vorliegenden Fall wird die Steuerung oder Regelung der Füllstandshöhe in den einzelnen Flüssigkeitsabscheidern 6 ladungsabhängig, also in Abhängigkeit des beim Betrieb der Brennstoffzellenanlage erzeugten Stroms geregelt. Diesem Ansatz liegt die Überlegung zugrunde, dass die anfallenden Massenströme an Produktwasser $\dot{m}_W$ sowie an auskondensierter Reaktantenfeuchte $\dot{m}_F$ direkt proportional zum über die Brennstoffzellenanlage erzeugten Strom und zur Zellenzahl des jeweiligen Brennstoffzellenstapels 2A,B,C sind. Wird nunmehr der aktuelle Stromwert über einen Zeitintervall $\Delta T$ aufsummiert, so lässt sich hieraus die absolute Menge $m_W$ an Produktwasser bzw. $m_F$ an auskondensierter Reaktantenfeuchte ableiten.

Durch eine einfache Strommessung und die Aufsummierung der gemessenen Stromwerte über die Zeit lässt sich daher die Zunahme der Füllstandshöhen in den einzelnen Flüssigkeitsabscheidern 6 rein rechnerisch ohne weiteren zusätzlichen apparativen Aufwand bestimmen. Zur Überwachung der absoluten Füllstandshöhe wird weiterhin beim Start der Brennstoffzellenanlage eine vordefinierte Anfangs-Füllstandshöhe eingestellt. Wird die maximale Füllstandshöhe erreicht, so wird ein jeweiliges Ablassventil 10 eines jeweiligen Flüssigkeitsabscheiders 6 gesteuert geöffnet. Bevorzugt bleiben die Ablassventile 10 eine bestimmte Zeit offen, die Entleerung erfolgt also zeitgesteuert. Dabei wird aus den konstruktiv vorgegebenen bekannten strömungstechnischen Größen und aus der Öffnungszeit die abgeflossene Menge an Wasser ermittelt, so dass sich eine neue definierte Füllstandshöhe ergibt. Anstelle der Zeitsteuerung kann auch ein Durchflussmessgerät vorgesehen sein. Als weitere Variante wird in einer zweckdienlichen Weiterbildung die Zeitsteuerung derart bemessen, dass der jeweilige Flüssigkeitsabscheider 6 vollständig oder nahezu vollständig leer läuft, so dass jeweils eine Anfangs-Füllstandshöhe von null eingestellt wird. Hierbei wird ein geringer, temporärer Gasdurchbruch in Kauf genommen.

Bei dieser Art der Steuerung und Überwachung der Füllstandshöhe ist es problemlos möglich, aus lediglich einer Strommessung individuell für jeden der Flüssigkeitsabscheider 6 dessen aktuelle Füllstandshöhe zu bestimmen und zu überwachen und daher auch jeden einzelnen Flüssigkeitsabscheider individuell zum Ablassen des Wassers anzusteuern. Hierbei wird ausgenutzt, dass aufgrund der elektrisch in Serie zueinander angeordneten Brennstoffzellenstapel 2A,B,C allen Brennstoffzellenstapeln 2A,B,C der gleiche aktuelle Stromwert I(t) aufgeprägt wird, so dass der Strom nur an einer Stelle gemessen werden braucht.

Zur Bestimmung der Zunahme der Füllstandshöhe in den einzelnen Flüssigkeitsabscheidern 6 und zu deren Überwachung ist die Auswerte- und Steuereinheit 20 vorgesehen. Dieser wird von dem Strommessgerät 18 der aktuelle Stromwert I(t) übermittelt. In der Auswerteeinheit wird hierbei aus der Relation

$$\dot{m}_G \ \sim \ I(t)$$

unter Zuhilfenahme des für eine Brennstoffzelle gültigen Faraday-Gesetzes

$$z \bullet F \bullet \dot{m}_G \, / \, M_G = I(t)$$

der Massenstrom $\dot{m}_G$ und über die Relation

$$\frac{z \bullet F}{M} \bullet \int \frac{dm_G}{dt} dt = \int I(t) dt$$

die Menge des jeweiligen bei der Reaktion verbrauchten Reaktionsgases $m_G$ pro Zeitintervall $\Delta T$ bestimmt. Hierbei ist z die Anzahl der bei der elektrolytischen Reaktion reagierenden Elektronen, F die Faraday-Konstante, $\dot{m}_G$ der Massenstrom des jeweiligen Reaktionsgases, also die Menge (Masse) des jeweiligen Reaktionsgases pro Zeiteinheit, $M_G$ die Molmasse des jeweiligen Reaktionsgases und I(t) der aktuelle Stromwert.

Aus der Reaktionsgleichung $2H_2 + 2O_2 \Rightarrow 2H_2O$ ergibt sich dann unmittelbar die Menge des abgeschiedenen Produktwassers $m_W$, die somit auch unmittelbar proportional zu den über das Zeitintervall $\Delta T$ aufsummierten aktuellen Stromwerten I(t) ist. Unter Berücksichtigung der hierin vorkommenden Konstanten beträgt die Menge des pro Brennstoffzelle anfallenden Produktwassers $m_W$ 0,3358 $\dfrac{ml}{Ah, Zelle}$ , d.h. bei einer Strommenge von einer Ampere-Stunde fallen pro Zelle 0,3358 ml an.

Für die Menge der auskondensierten Reaktantenfeuchte $m_F$ gilt

$$m_F = X \bullet m_G$$

gilt. X ist der Befeuchtungsfaktor, der sich nach folgender Gleichung bestimmt:

$$X = \left[ p_D \middle/ (p_{ges} - p_D) \right] \bullet \frac{M_D}{M_G}$$

Hierbei ist $p_D$ der Wasser-Dampfdruck, $p_{ges}$ der Gesamtdruck, $M_D$ die Molmasse des Wasserdampfes und $M_G$ die Molmasse des Gases. Die Menge der abgeschiedenen Reaktantenfeuchte $m_F$ lässt sich daher bei bekannten Drücken und bei bekannter Temperatur ebenfalls aus den aufsummierten aktuellen Stromwerten I(t) bestimmen.

Neben oder alternativ zur Bestimmung der Zunahme der Wassermenge in den jeweiligen Flüssigkeitsabscheidern 6 wird über die Messung des Stroms bevorzugt auch die Zunahme und damit die Menge der sich im Spülzellenstapel 2C ansammelnden Inertgase ermittelt. Bei bekanntem Anteil der Inertgase am Gasstrom der Reaktionsgase ergibt sich dies unmittelbar aus der Relation, dass der Massenstrom der Reaktionsgase proportional zum aktuellen Stromwert ist, so dass auch der Massenstrom der Inertgase $\dot{m}_I$ proportional zum aktuellen Stromwert ist.

Dies wird zweckdienlicherweise zur individuellen Aussteuerung der jeweiligen Spülventile 14 herangezogen. D.h. bei Erreichen einer bestimmten Inertgaskonzentration auf der Sauerstoffseite oder auf der Wasserstoffseite werden die Spülventile 14 für eine vorbestimmte oder gesteuerte Zeitdauer geöffnet.

Durch die beschriebene Stromwert-abhängige Steuerung insbesondere der Ablassventile 10 werden Leistungsschwankungen der Brennstoffzellenanlage, die in schwankenden aktuellen Stromwerten I(t) resultieren, problemlos berücksichtigt, so dass die aktuellen Füllstandshöhen in den einzelnen Flüssigkeitsabscheidern 6 jederzeit zu bestimmen sind. Gleichzeitig ist diese individuelle Bestimmung der Füllstandshöhen ohne großen apparativen Aufwand möglich. Es ist lediglich ein Strommessgerät erforderlich. Auf Füllstandssensoren bei den einzelnen Flüssigkeitsabscheidern 6 wird vorzugsweise vollständig verzichtet. Insbesondere bei kaskadierten Brennstoffzellenanlagen mit einer Vielzahl von einzelnen Brennstoffzellenstapeln 2A,B,C bedeutet dies eine erhebliche Vereinfachung des apparativen Aufwands.

**Patentansprüche**

1. Verfahren zur Steuerung der Füllstandshöhe eines Flüssigkeitsabscheiders (6) einer Brennstoffzellenanlage mit mehreren strömungstechnisch in Reihe angeordneten Brennstoffzellenstapel (2A,B,C), zwischen denen der Flüssigkeitsabscheider (6) angeordnet ist, wobei dem jeweiligen Brennstoffzellenstapel (2A,B,C) Reaktionsgase ($H_2$, $O_2$) zugeführt werden, ein bestimmter Massenstrom ($\dot{m}_G$) der jeweiligen Reaktionsgase ($H_2,O_2$) bei der elektrolytischen Reaktion umgesetzt wird und als Ergebnis der Reaktion Wasser anfällt, das im Flüssigkeitsabscheider (6) gesammelt wird, wobei die von der Brennstoffzellenanlage in einem Zeitintervall ($\Delta T$) erzeugte Strommenge als Maß für den im Zeitintervall ($\Delta T$) umgesetzten Massenstrom ($\dot{m}_G$) erfasst und hieraus die Menge ($m_W$, $m_F$) der im Zeitintervall ($\Delta T$) angefallenen Wassers bestimmt und in Abhängigkeit hiervon die Füllstandshöhe gesteuert wird.

2. Verfahren nach Anspruch 1, bei dem die Menge ($m_w$) eines bei der elektrolytischen Reaktion im Zeitintervall ($\Delta T$) anfallenden Produktwassers als Reaktionsprodukt bestimmt wird.

3. Verfahren nach Anspruch 1 oder 2, bei dem die dem Brennstoffzellenstapel zugeführten Reaktionsgase ($H_2$, $O_2$) eine Reaktantenfeuchte aufweisen, die auskondensiert und im Flüssigkeitsabscheider (6) anfällt, wobei die im Zeitintervall ($\Delta T$) anfallende Menge ($m_F$) der Reaktantenfeuchte bestimmt wird.

4. Verfahren nach einem der vorhergehenden Ansprüche, bei dem der Massenstrom ($\dot{m}_G$) aus der Gleichung $z \cdot F \cdot \dot{m}_G / M_G = I(t)$ bestimmt wird, wobei z die Anzahl der bei der Reaktion teilnehmenden Elektronen, $F$ die Faraday-Konstante, $M_G$ die Molmasse des jeweiligen Reaktionsgases ($H_2$, $O_2$) und I(t) der aktuelle Stromwert ist.

5. Verfahren nach einem der vorhergehenden Ansprüche, bei dem ausgehend von einer bekannten Anfangs-Füllstandshöhe die aktuelle Füllstandshöhe errechnet wird und bei Erreichen einer maximalen Füllstandshöhe ein Ablassventil (10) zur Entleerung des Flüssigkeitsabscheiders (6) geöffnet wird.

6. Verfahren nach Anspruch 5, bei dem die Entleerung gesteuert, insbesondere zeitgesteuert erfolgt, so dass sich im Flüssigkeitsabscheider (6) eine neue definierte Anfangs-Füllstandshöhe einstellt.

7. Verfahren nach einem der vorhergehenden Ansprüche, bei dem die Brennstoffzellenstapel (2A,B,C) mit unterschiedlichen Teil-Massenströmen (T1,T2,T3) beaufschlagt werden und die Teil-Massenströme (T1,T2,T3) zueinander ein definiertes Verhältnis aufweisen.

8. Verfahren nach einem der vorhergehenden Ansprüche, bei dem die Brennstoffzellenanlage eine Spülzelle (2C) aufweist, in der sich Wasser sowie Inertgase ansammeln, wobei die Spülzelle (2C) in Abhängigkeit der Strommenge gespült wird.

9. Verfahren nach Anspruch 8, bei dem bei bekanntem Inertgasanteil des jeweiligen Reaktionsgases ($H_2,O_2$) die

Menge des in der Spülzelle (2C) angesammelten Inertgases bestimmt wird und bei Erreichen eines vorbestimmten Inertgasanteils in der Spülzelle (2C) diese gespült wird.

10. Brennstoffzellenanlage

    - mit mehreren strömungstechnisch in Reihe angeordneten Brennstoffzellenstapel (2A,B,C), zwischen denen jeweils ein Flüssigkeitsabscheider (6) angeordnet ist, wobei den Brennstoffzellenstapeln (2A,B,C) im Betrieb Reaktionsgase ($H_2$,$O_2$) zugeführt werden, so dass ein bestimmter Massenstrom ($\dot{m}_G$) der jeweiligen Reaktionsgase ($H_2$,$O_2$) bei der
    - elektrolytischen Reaktion umgesetzt wird und als Ergebnis der Reaktion Wasser anfällt,
    - mit einer Strommesseinrichtung (18) zur Messung des aktuellen Stromwerts (I(t)),
    - mit einer Auswerteeinheit (20), mit deren Hilfe aus den in einem Zeitintervall ($\Delta$T) aufsummierten Stromwerten (I(t))die im Zeitintervall ($\Delta$T) angefallene Wassermenge ($m_W$, $m_F$) bestimmt wird, sowie
    - mit einer Steuereinheit (20) zur Ansteuerung eines Ablassventil (10) des Flüssigkeitsabscheiders (6) zur Steuerung der Füllstandshöhe in Abhängigkeit der angefallenen Wassermenge.

11. Brennstoffzellenanlage nach Anspruch 10, bei der mit Hilfe der Auswerteeinheit (20) aus den in einem Zeitintervall ($\Delta$T) aufsummierten Stromwerten (I(t))eine im Zeitintervall ($\Delta$T) angefallene Inertgasmenge ($m_I$) bestimmt wird und die Steuereinheit (20) zur Ansteuerung eines Spülventils (14) einer Spülzelle (2C) vorgesehen ist.

## Claims

1. Method for controlling the filling level of a liquid separator (6) in a fuel cell installation having a plurality of fuel cell stacks (2A, B, C) which are arranged in series for flow purposes and between which the liquid separator (6) is arranged, with the respective fuel cell stack (2A, B, C) being supplied with reaction gases ($H_2$, $O_2$), with a specific mass flow ($\dot{m}_G$) of the respective reaction gases ($H_2$, $O_2$) being used in the electrolytic reaction and with water being produced as the result of the reaction, which is gathered in the liquid separator (6), with the amount of current which is produced by the fuel cell installation in a time interval ($\Delta$T) being recorded as a measure of the mass flow ($\dot{m}_G$) used in the time interval ($\Delta$T), and with the amount ($m_W$, $m_F$) of the water produced in the time interval ($\Delta$T) being determined from this, and with the filling level being controlled as a function of this.

2. Method according to Claim 1, in which the amount ($m_W$) of product water which is produced during the electrolytic reaction in the time interval ($\Delta$T) is determined as a reaction product.

3. Method according to Claim 1 or 2, in which the reaction gases ($H_2$, $O_2$) which are supplied to the fuel cell stack have reactant moisture which condenses out and is collected in the liquid separator (6), with the amount ($m_F$) of reactant moisture which is produced in the time interval ($\Delta$T) being determined.

4. Method according to one of the preceding claims, in which the mass flow ($\dot{m}_G$) is determined using the equation z $\cdot$ F $\cdot$ $\dot{m}_G$/$M_G$=I(t), where z is the number of electrons which are involved in the reaction, F is the Faraday constant, $M_G$ is the molar mass of the respective reaction gas ($H_2$, $O_2$), and I(t) is the instantaneous current value.

5. Method according to one of the preceding claims, in which the instantaneous filling level is calculated from a known initial filling level, and an outlet valve (10) is opened on reaching a maximum filling level, in order to empty the liquid separator (6).

6. Method according to Claim 5, in which the emptying is controlled, in particular time-controlled, such that a newly defined initial filling level is set in the liquid separator (6).

7. Method according to one of the preceding claims, in which the fuel cell stacks (2A, B, C) have different mass flow elements (T1, T2, T3) applied to them, and the mass flow elements (T1, T2, T3) have a defined ratio with respect to one another.

8. Method according to one of the preceding claims, in which the fuel cell installation has a purging cell (2C), in which water as well as inert gases accumulate, with the purging cell (2C) being purged as a function of the amount of current.

9. Method according to Claim 8, in which, if the inert gas component of the respective reaction gas ($H_2$, $O_2$) is known,

the amount of inert gas which has accumulated in the purging cell (2C) is determined, and the purging cell (2C) is purged on reaching a predetermined inert gas component in the purging cell (2C).

10. Fuel cell installation

  - having a plurality of fuel cell stacks (2A, B, C) which are arranged in series for flow purposes and between which the liquid separator (6) is arranged, with the respective fuel cell stacks (2A, B, C) being supplied with reaction gases (H$_2$, O$_2$) during operation, such that a specific mass flow ($\dot{m}_G$) of the respective reaction gases (H$_2$, O$_2$) is used in the electrolytic reaction and water is produced as a result of the reaction,
  - having a current measurement device (18) for measurement of the instantaneous current value (I(t)),
  - having an evaluation unit (20), with whose aid the amount of water (m$_W$, m$_F$) produced in the time interval ($\Delta$T) is determined from the current values (I(t)) added up in a time interval ($\Delta$T), and
  - having a control unit (20) for driving an outlet valve (10) of the liquid separator (6) in order to control the filling level as a function of the amount of water produced.

11. Fuel cell installation according to Claim 10, in which an amount of inert gas which is produced in the time interval ($\Delta$T) is determined with the aid of the evaluation unit (20) from the current values (I(t)) added up in a time interval ($\Delta$T), and the control unit (20) is provided in order to drive a purging valve (14) of a purging cell (2C).

**Revendications**

1. Procédé de réglage du niveau de remplissage d'un séparateur (6) de liquide d'une installation de piles à combustible ayant plusieurs empilements (2A, B, C) de piles à combustible qui sont montées en série du point de vue de la technique des fluides et entre lesquelles est disposé le séparateur (6) de liquide, des gaz (H$_2$, O$_2$) de réaction étant apportés à l'empilement (2A, B, C) de piles à combustible respectif, un courant ($\dot{m}_G$) massique déterminé des gaz (H$_2$, O$_2$) de réaction respectifs étant transformé dans la réaction électrolytique et il se forme, en résultat de la réaction, de l'eau qui s'est accumulé dans le séparateur (6) de liquide, la quantité de courant électrique produite par l'installation de piles à combustible dans un intervalle ($\Delta$T) de temps étant détectée en tant que mesure du courant ($\dot{m}_G$) massique transformé dans l'intervalle ($\Delta$T) de temps et la quantité (m$_W$, m$_F$) de l'eau formée dans l'intervalle ($\Delta$T) de temps en étant déterminée, et le niveau de remplissage étant réglé en fonction de cela.

2. Procédé suivant la revendication 1, dans lequel la quantité (m$_W$) d'eau produite se formant dans la réaction électrolytique dans l'intervalle ($\Delta$T) de temps est déterminée sous la forme du produit de réaction.

3. Procédé suivant la revendication 1 ou 2, dans lequel les gaz (H$_2$, O$_2$) de réaction apportés rapidement de piles à combustible ont une humidité de réactif qui se condense et précipite dans le séparateur (6) de liquide, la quantité (m$_F$) d'humidité de réactif se produisant pendant l'intervalle ($\Delta$T) de temps étant déterminée.

4. Procédé suivant l'une des revendications précédentes, dans lequel le courant ($\dot{m}_G$) massique est déterminé par l'équation $z \cdot F \cdot \dot{m}_G / M_G = I(t)$, z étant le nombre des électrons prenant part à la réaction, F étant la constante de Faraday, $M_G$ étant la masse molaire du gaz (H$_2$, O$_2$) de réaction respectif et I (t) la valeur instantanée du courant électrique.

5. Procédé suivant l'une des revendications précédentes, dans lequel, à partir d'un niveau de remplissage initial connu, on calcule le niveau de remplissage instantané et, lorsqu'un niveau de remplissage maximum est atteint, on ouvre une vanne (10) d'évacuation pour vider le séparateur (6) de liquide.

6. Procédé suivant la revendication 5, dans lequel on effectue la vidange de manière commandée, notamment commandée dans le temps, de façon à établir un niveau de remplissage initial nouvellement défini dans le séparateur (6) de liquide.

7. Procédé suivant l'une des revendications précédentes, dans lequel on alimente les empilements (2A, B, C) de piles à combustible en des sous-courants (T1, T2, T3) massiques différents, et les sous-courants (T1, T2, T3) massiques ont un rapport défini entre eux.

8. Procédé suivant l'une des revendications précédentes, dans lequel l'installation de piles à combustible comprend une cellule (2C) de lavage dans laquelle s'accumule de l'eau ainsi que du gaz inerte, la cellule (2C) de lavage étant lavée en fonction de la quantité du courant électrique.

9. Procédé suivant la revendication 8, dans lequel on détermine, pour la proportion de gaz inerte connue du gaz (H$_2$, O$_2$) de réaction respectif, la quantité de gaz inerte accumulée dans la cellule (2C) de lavage et lorsqu'une proportion de gaz inerte déterminée à l'avance est atteinte dans la cellule (2C) de lavage, on la lave.

10. Installation de piles à combustible

   - comprenant plusieurs empilements (2A, B, C) de piles à combustible qui sont montées en série du point de vue de la technique des fluides et entre lesquelles est disposé le séparateur (6) de liquide, des gaz (H$_2$, O$_2$) de réaction étant apportés à l'empilement (2A, B, C) de piles à combustible respectif, un courant ($\dot{m}_G$) massique déterminé des gaz (H$_2$, O$_2$) de réaction respectifs étant transformé dans la réaction électrolytique et il se forme, en résultat de la réaction, de l'eau,
   - comprenant un dispositif (18) de mesure du courant électrique pour la mesure de la valeur (I(t)) instantanée du courant électrique,
   - comprenant une unité (20) d'exploitation, à l'aide de laquelle il est déterminé la quantité (m$_W$, m$_F$) d'eau se formant dans un intervalle ($\Delta$T) de temps à partir des valeurs (I(t)) de courant électrique sommées dans l'intervalle ($\Delta$T) de temps, ainsi que
   - comprenant une unité (20) de commande pour commander une vanne (10) d'évacuation du séparateur (6) de liquide afin de régler le niveau de remplissage en fonction de la quantité d'eau formée.

11. Installation de piles à combustible suivant la revendication 10, dans laquelle on détermine, à l'aide de l'unité (20) d'exploitation, une quantité (m$_I$) de gaz inerte formé dans l'intervalle ($\Delta$T) de temps à partir des valeurs (I(t)) de courant électrique sommées dans l'intervalle ($\Delta$T) de temps, et l'unité (20) de commande est prévue pour commander une vanne (14) de lavage d'une cellule (2C) de lavage.